(19) Europäisches Patentamt
European Patent Office
Office européen des brevets

(11) Numéro de publication: **0 202 180 B1**

# (12) FASCICULE DE BREVET EUROPEEN

(45) Date de publication du fascicule du brevet: **25.07.90**

(51) Int. Cl.⁵: **C09D 183/00**, C08J 7/04

(21) Numéro de dépôt: **86420122.3**

(22) Date de dépôt: **13.05.86**

(54) **Vernis à haute dureté résistant à l'abrasion, procédé pour leur préparation, et application de ces vernis au revêtement de substrats solides.**

(30) Priorité: **13.05.85 FR 8507806**

(43) Date de publication de la demande:
**20.11.86 Bulletin 86/47**

(45) Mention de la délivrance du brevet:
**25.07.90 Bulletin 90/30**

(84) Etats contractants désignés:
**AT BE CH DE GB IT LI LU NL SE**

(56) Documents cités:
**EP-A- 0 017 187**
**DE-A- 2 937 910**
**GB-A- 2 047 721**
**GB-A- 2 137 648**
**US-A- 4 355 135**

(73) Titulaire: **LA CELLIOSE S.A., Rue Henri Moisan, F-69310 Pierre-Benite(FR)**

(72) Inventeur: **Vantillard, Alain, 16 rue Châtelain, Sainte-Foy-Les-Lyon Rhône(FR)**
Inventeur: **Pellenc, Joel, 194 chemin du Petit Violet, Charly Rhône(FR)**
Inventeur: **Verne, Claude, 12 rue Emile Bressat, Bron Rhône(FR)**

(74) Mandataire: **Maureau, Philippe et al, Cabinet Germain & Maureau Le Britannia - Tour C 20, bld Eugène Déruelle Boite Postale 3011, F-69392 Lyon Cédex 03(FR)**

EP 0 202 180 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des vernis à haute dureté, résistant à l'abrasion, et qui, destinés au revêtement des surfaces de substrats solides relativement tendres, sont du type de ceux essentiellement à base de polysiloxanes époxydés et non époxydés, de silice colloïdale et de résine aminoplaste.

La faible dureté superficielle des matières thermoplastiques non chargées les rend très sensibles à l'abrasion et aux rayures, ce qui entraîne rapidement une dégradation de leur aspect. Aussi a-t-on cherché depuis de nombreuses années à les rendre moins vulnérables en les recouvrant de divers types de vernis, à dureté plus élevée que celle de la matière sous-jacente.

De même, la plupart des matières plastiques métallisées sous vide et certains métaux, comme l'or, l'argent, l'aluminium, le cuivre, le laiton ou le bronze ont besoin dans certains cas de revêtements protecteurs pour conserver un bel aspect de surface tout au long de leur utilisation.

Le problème général des vernis à haute dureté, résistant à l'abrasion, pour le revêtement des substrats solides tendres, est à l'origine de nombreux travaux, qui n'ont encore pas abouti à des solutions entièrement satisfaisantes.

Il a par exemple été proposé dans le brevet USA 4.018.941 d'utiliser des revêtements peu coûteux, à base de polyuréthanes thermodurcissables. Mais ces revêtements ont une dureté superficielle trop faible.

Une autre voie de recherche plus largement explorée est celle qui consiste à utiliser des dérivés inorganiques et/ou organiques du silicium. Des solutions à base de silice ou des compositions contenant un acide polysilicique et un copolymère fluoré se sont révélées trop sensibles à l'humidité ou trop coûteuses.

On s'est alors tourné vers l'emploi d'organopolysiloxanes. C'est ainsi que le brevet USA 3.935.346 revendique, pour le revêtement des matières plastiques, des solutions contenant le produit de condensation partielle d'un silanol et, comme promoteur de durcissement, une résine mélamine-formaldéhyde méthylée et isobutylée, partiellement condensée.

Divers documents recommandent l'emploi de silanes hydrolysables à fonction époxyde susceptibles d'être durcis par différents moyens :
- acide perfluorosulfonique ou dérivé sulfonyle perfluoré, selon la demande de brevet déposée en République Fédérale Allemande sous le N° 2.609.148 ;
- acide polycarboxylique ou son anhydride, en présence d'un catalyseur, selon la demande de brevet britanique 2.044.787 ;
- chélate d'aluminium, selon le brevet USA 4.211.823.

D'après la demande de brevet allemand 3.021.018, des compositions contenant un produit d'hydrolyse et de précondensation d'un trialcoxysilane, associé éventuellement à un tétraalcoxysilane, un acide carboxylique et un tensio-actif anionique fluoré, conviennent pour le revêtement des matières plastiques.

L'introduction de silice colloïdale dans les revêtements à base de polysiloxanes a marqué un progrès certain dans la résistance à l'abrasion.

Diverses compositions de ce genre ont été décrites par exemple dans les brevets des USA 3.708.225, 3.976.497 et 3.986.997. La flexibilité de ces revêtements peut être améliorée, selon la demande de brevet français 2.412.595, par l'incorporation d'un phényltrisilanol à côté du méthyltrisilanol habituellement utilisé. Ces compositions présentent toutes un pH acide. Des combinaisons voisines, mais à caractère légèrement basique, sont décrites notamment dans le brevet belge 885.533 et dans la demande de brevet français 2.474.044.

On a encore tenté d'améliorer ces compositions de revêtement par adjonction d'un copolymère polysiloxane/polyéther, comme indiqué dans les demandes de brevets allemands 2 947 879 et 3 016 021.

Pour filtrer les radiations ultra-violettes, le brevet français 2 446 308 associe de l'oxyde de titane colloïdal à la silice colloïdale.

Selon le brevet britannique 2 137 648, les alcoxysilanes époxydés et non époxydés sont associés à une silice colloïdale et un composé organique du titane. Les catalyseurs de cuisson : acétylacétonates de métaux, diamides, amines, acides sulfoniques organiques permettent de diminuer le temps de cuisson.

L'adhérence des revêtements est augmentée et le temps de cuisson diminué si, comme l'indique le brevet US 4 311 763, on utilise de petites quantités d'une béta-hydroxycétone.

De son côté, le brevet allemand 2 914 427 propose d'améliorer l'élasticité et l'adhérence des revêtements par l'adjonction à la silice colloïdale et au siloxane partiellement hydroxylé, d'un polyisocyanate bloqué.

Par le brevet britannique 2 047 721 sont connues des compositions des revêtements contenant essentiellement une résine mélamine formaldéhyde (10 à 95% en poids par rapport au total des constituants) et une silice colloïdale (5 à 90% en poids). Un troisième constituant est présent en faible proportion. Il s'agit d'un alcoxysilane porteur d'une fonction époxy ou non qui est utilisé en faible quantité (0,5 à 10% en poids).

Le brevet français 2 454 455 divulgue des compositions assez voisines.

Le brevet US 4 355 135 revendique une composition dont les composants principaux sont: la silice colloïdale et les produits de condensation partielle de silanols époxydés éventuellement associés à des silanols non époxydés, réticulés par des diacydes carboxyliques, ou des anhydrites d'acides carboxyliques, ou des diamides, en présence de catalyseurs comme les acétylacétonates métalliques, les diamides, les amines, les imidazoles, les acides sulfoniques, et leurs sels d'amines, ou les sels alcalins d'acides carboxyliques.

Enfin, le brevet français 2 515 667 indique des compositions très voisines de celle précédente.

Les différentes solutions que l'art antérieur a essayé d'apporter au problème des revêtements résistant à l'abrasion présentent toutes au moins l'un des défauts suivants, tenant soit à des performances insuffisantes, soit à des complications dans la mise en œuvre:
- dureté trop faible ;
- résistance à l'abrasion insuffisante ;
- manque de soupless ;
- nécessité d'utiliser une sous-couche pour obtenir l'adhérence sur matières plastiques ;
- température et/ou temps de cuisson trop élevés.

La présente invention remédie à tous ces inconvénients, en fournissant des revêtements transparents, très durs, mais suffisamment flexibles, à haute résistance à l'abrasion qui ne demandent que des temps de cuisson de une à deux heures à des températures d'environ 120°C. L'adhérence sur les matières thermoplastiques se fait directement et se révèle excellente. Sur métaux, l'utilisation d'une sous-couche thermoplastique acrylique est parfois nécessaire. Les compositions de vernis selon l'invention sont des solutions dans un mélange de solvants des constituants suivants :

a - 4 à 90% en poids, par rapport au total des constituants (a), (b) et (c), d'une silice colloïdale,

b - 9 à 95 % en poids, par rapport au total des constituants (a), (b) et (c), du produit d'hydrolyse et de condensation partielle d'au moins un trialcoxysilane non époxydé,

c - 1 à 87 % en poids, par rapport au total des constituants (a), (b) et (c), du produit d'hydrolyse et de condensation partielle d'au moins un trialcoxysilane porteur d'un groupement époxyde,

d - et 0,5 à 9 % en poids, par rapport au total des constituants (a), (b) et (c), d'une résine aminoplaste soluble (d).

Bien que les compositions selon l'invention n'utilisent que des matières premières déjà connues pour cette application, leur supériorité vis-à-vis des compositions déjà décrites apparaît due à l'emploi simultané de deux types d'alcoxysilanes époxydés et non époxydés, dans une proportion totale supérieure à 11 % par rapport à la silice colloïdale, et d'une résine aminoplaste soluble, dans une proportion inférieure ou égale à 9 % par rapport au total des alcoxysilanes et de la silice colloïdale. Le constituant (a) est une silice colloïdale en dispersion aqueuse, acide ou basique, possédant des particules d'un diamètre de 1 à 150 nanomètres. On utilise cependant de préférence des dispersions ayant des tailles de particule de 10 à 30 nanomètres environ, qui sont plus stables et confèrent de meilleures propriétés optiques aux revêtements. De telles dispersions de silice colloïdale sont disponibles commercialement sous les marques déposées "LUDOX" de la Société du PONT DE NEMOURS, et "NALCOAG" de la Société NALCO. Le constituant (b) est le produit d'hydrolyse et de condensation partielle d'au moins un trialcoxysilane non époxydé, répondant à la formule

$R - Si ( OR ' )_3$

dans laquelle R représente un radical choisi dans le groupe des radicaux alkyles contenant de 1 à 4 atomes de carbone et des radicaux chloro-3-propyle, trifluoro-3,3-3-propyle, mercapto-3-propyle, méthacryloxy-3-propyle, vinyle et phényle, tandis que R' est un radical alkyle contenat de 1 à 4 atomes de carbone ou un radical alcoxyalkyle contenant de 2 à 4 atomes de carbone. Une partie du trialcoxysilane non époxydé, pouvant représenter jusqu'à 30 % de sa masse, peut être remplacée par un dialcoxysilane et/ou par un tétraalcoxysilane. Le constituant (c) est le produit d'hydrolyse et de condensation partielle d'au moins un trialcoxysilane époxydé, répondant à la formule

$R'' - Si ( OR ' )_3$

dans laquelle R" représente un radical porteur d'un groupement époxyde et R' a la même signification que ci-dessus. Comme exemples de radicaux R", on peut citer les suivants :

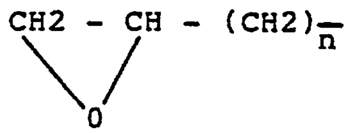 avec n variant de 0 à 4

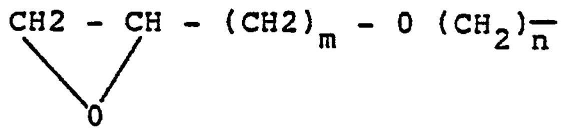 avec m et n variant de 1 à 4

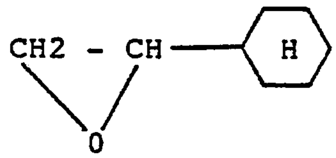

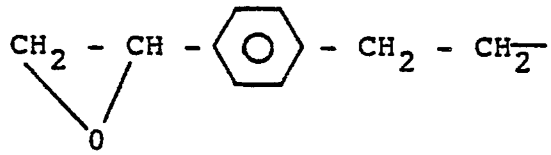

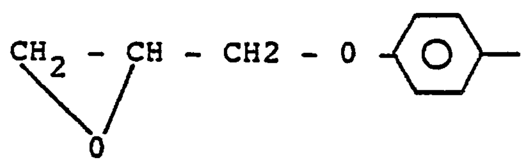

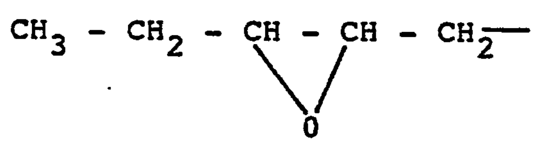

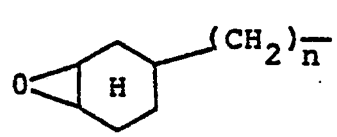 avec n variant de 0 à 4

Le constituant (d) est une résine aminoplaste soluble, qui peut être du type mélamine-formaldéhyde ou du type urée-formaldéhyde. Les fonctions méthylolées de cette résine peuvent être éthérifiées en totalité ou en partie au moyen d'alcools aliphatiques contenant de 1 à 4 atomes de carbone. De telles résines sont disponibles dans le commerce sous diverses marques déposées, telles que "LUWIPAL" de la BASF, "CYMEL" de AMERICAN CYANAMID Co, "DYNOMIN" de DYNO CYANAMID, "MAPRENAL" de HOECHST, "PLASTOPAL" de la BASF, ou "RESAMIN" de HOECHST.

Les constituants (a), (b), (c) et (d) représentent ensemble une proportion de 10 à 50 % en poids de vernis final. Le reste est constitué essentiellement d'un mélange de solvants, qui comporte de l'eau légèrement acidulée par un acide carboxylique et des alcools aliphatiques inférieurs contenant de 1 à 5 atomes de carbone. Divers autres solvants polaires miscibles à l'eau, comme les glycols et leurs éthers, les cétones, les esters, peuvent entrer dans le mélange de solvants. Des solvants apolaires, non miscibles à l'eau mais miscibles au mélange précédent, comme des hydrocarbures aromatiques, peuvent également entrer dans les compositions. Le choix du mélange de solvants est adapté par l'homme du métier aux exigences industrielles d'application et à la nature du substrat solide à revêtir. En effet, les solvants utilisés ne doivent pas, après un contact plus ou moins prolongé avec le support, le fissurer et le fragiliser.

Les vernis selon l'invention peuvent également contenir divers adjuvants secondaires, tels que des

colorants, des agents de tension du film ou des agents améliorant la tenue aux radiations ultra-violettes. Un catalyser acide de durcissement, tel que l'acide chlorhydrique, l'acide acétique ou l'acide paratoluènesulfonique, peut être ajouté en faibles quantités pour diminuer encore les temps de cuisson, mais son emploi n'est généralement pas nécessaire.

La préparation des vernis selon l'invention peut se faire de manière connue, en coulant lentement sous agitation le mélange des alcoxysilanes époxydés et non époxydés dans la dispersion aqueuse de silice colloïdale, préalablement acidulée vers pH 3 par de l'acide formique ou de l'acide acétique. La durée de la coulée des alcoxysilanes est en général de 30 à 60 minutes, et pendant toute la coulée, on maintient la température du mélange réactionnel en dessous de 45°C.

Dans un mode opératoire préféré, on coule d'abord le ou les alcoxysilanes non époxydés dans la dispersion de silice colloïdale, on laisse l'hydrolyse se poursuivre pendant une quinzaine de minutes, puis on coule le ou les alcoxysilanes époxydés.

Dans tous les cas, après la coulée des alcoxysilanes, on maintient le mélange sous agitation à la température ambiante pendant environ 24 heures. La plus grande partie de l'eau n'ayant pas participé à la réaction et des alcools résultant de l'hydrolyse des alcoxysilanes est alors distilée sous agitation et sous pression réduite, à une température ne dépassant pas 30°C ; et on arrête cette distillation lorsque l'extrait-sec du résidu se situe entre 50 et 85 % en poids. Le résidu est ensuite dilué par le mélange de solvants choisi pour amener l'extrait-sec entre 25 et 45 % en poids. La résine mélamine-formaldéhyde ou la résine urée-formaldéhyde est alors rajoutée au vernis, ainsi qu'éventuellement les adjuvants secondaires et le catalyseur de durcissement.

Les vernis terminés sont appliqués sur la surface nettoyée des substrats à revêtir par tout moyen connu, tel que l'immersion, l'application au pinceau ou au rouleau, le revêtement par rotation ou par écoulement, la pulvérisation... Ce dernier moyen est préféré. On utilise pour cela un pistolet pneumatique classique. L'épaisseur des revêtements durcis est en général comprise entre 1 et 30 micrométres, une épaisseur d'environ 5 à 10 micrométres convenant le plus souvent. Après un pré-séchage à l'air pendant 10 à 30 minutes, le vernis est cuit à une température d'environ 120°C pendant une durée d'une heure ou deux, pour assurer son durcissement.

Des vernis selon l'invention et divers vernis préparés à titre comparatif ont été testés sur des éprouvettes en LEXAN LS 2 - 111, marque déposée de la Société GENERAL ELECTRIC CO, pour un polycarbonate. Les éprouvettes ont été préalablement nettoyées à l'aide d'un mélange d'isopropanol et d'éthanol. Les vernis ont été ramenés à 30 % en poids d'extrait-sec par dilution avec un mélange de solvants contenant 40 % de toluène, 24 % d'acétate d'éthylglycol, 19 % de cyclohexanone et 17 % d'éthylglycol. Les vernis ont été appliqués sur la surface des éprouvettes en polycarbonate à l'aide d'un pistolet pneumatique, de façon à ce que l'épaisseur du film sec soit comprise entre 5 et 10 micromètres. Après séchage à l'air, ils ont été cuits à 120°C pendant des durées de 1 heure à 2 heures selon leur composition.

Pour apprécier la qualité des revêtements, les méthodes d'essai suivantes ont été appliquées:

Adhérence

L'essai est effectué selon la norme française T 30038, qui consiste à inciser le film de vernis jusqu'au support, en réalisant un quadrilage. Cet essai est complété par un test d'arrachage à l'aide d'un ruban adhésif (ruban SCOTCH, marque déposée de la Société MINNESOTA MINING AND MANUFACTURING Co.). Pour l'évaluation des résultats, on affecte à chaque essai une note allant de 0 à 5. La note 0 correspond à une adhérence parfaite, alors que la note 5 correspond à une adhérence nulle.

Dureté au crayon

On utilise pour ce test une série de 17 crayons, présentant des degrés de dureté croissants : 6 B à B, HB, F, H à 9 H. On entend par dureté au crayon la désignation du crayon le plus mou, qui laisse encore sur le film de vernis une trace d'écriture, tandis que le suivant le plus proche pénètre dans le film en laissant une rayure. L'appareil utilisé permet de déplacer lentement le crayon sur le film de vernis sous un angle de 45° et sous une charge de 750 g.

Abrasion

Le vernis est appliqué sur des disques en polycarbonate de 100 millimètres de diamètre. Les essais d'abrasion sont effectués à l'aide d'un abrasimétre TABER, modèle 503, selon la norme française T 30015, en utilisant une charge de 500 g et en fixant le nombre de cycles à 300. L'abrasimètre est construit par la Société TELEDYNE TABER, NORTH TONAWANDA, NEW YORK (USA). Les meules utilisées portent la référence CS 10 F, et sont rectifiées avant chaque essai à l'aide de disques abrasifs de référence S.11. On appelle "voile" le pourcentage de lumière totale transmise, qui en passant à travers l'échantillon est dévié de sa direction initiale par dispersion. On mesure le pourcentage de changement dans le voile (% Δ voile) sur une éprouvette, avant et après abrasion, selon la norme ASTM D.1003-61, au moyen d'un appareil dénommé "HAZEMETER", et construit par GARDNER LABORATORY DIVISION, BETHESDA, MD 20014 (USA).

Tenue à la lumière

L'essai est réalisé selon la norme française T 30057 au moyen d'un appareil XENOTEST, modéle 450. Les éprouvettes vernies sont exposées à la lumiére d'une lampe au xénon, reproduisant une émission spectrale aussi proche que possible de la lumière solaire à travers une vitre. Des observations régulières permettent de suivre l'évolution des éprouvettes. L'essai est arrêté lorsque des modifications telles que jaunissement, craquelures, perte d'adhérence du film, apparaissent sur les éprouvettes.

Les essais comparatifs et les exemples donnés ci-dessous avec leurs résultats illustrent de façon non limitative divers aspects de l'invention.

Essai comparatif A

Cet essai est effectué sans silice colloïdale et sans alcoxysilane époxydé.

On fait réagir dans un récipient en verre de 1000 ml 250 g de méthyltriméthoxysilane avec 100 g d'eau. Le milieu est acidifié avec 20 ml d'acide formique pour ajuster le pH à 3. L'hydrolyse est réalisée sous agitation pendant 24 heures et en refroidissant la solution de manière à ce que la température ne dépasse pas 45°C.

Le méthanol formé et l'eau en excès sont évaporés partiellement sous pression réduite et sous agitation, à une température inférieure à 30°C, jusqu'à ce que le volume de la solution soit ramené à 50 % de son volume initial. La composition obtenue est diluée avec 100 g d'isopropanol et 100 g de n-butanol. Au vernis ainsi dilué, on ajoute 2 % en poids d'une résine d'hexaméthylméthoxymélamine, CYMEL 303®. On ramène l'extrait-sec à 30 % avec le mélange solvants et on applique le revêtement sur une surface de polycarbonate. La durée de cuisson a été de 2 heures à 120°C. L'adhérence au test de quadrillage est nulle et la dureté au crayon a une valeur de 7 H. La tension du film est insuffisante.

Essai comparatif B

Cet essai est effectué sans silice colloïdale, mais avec deux alcoxysilanes, l'un époxydé, l'autre non époxydé.

On mélange dans un récipient en verre de 1000 ml 250 g de méthyltriméthoxysilane, 216 g de glycidoxypropyltriméthoxysilane, 150 g d'eau et 20 ml d'acide formique. L'hydrolyse est conduite comme dans l'essai comparatif A et l'évaporation est poursuivie jusqu'à ce que la teneur en extrait-sec soit de 75 % en poids. Le produit est dilué à 40 % avec un mélange en parties égales de n-butanol et d'isopropanol. On ajoute alors au vernis dilué 2 % en poids de résine CYMEL 303®, puis on ramène l'extrait-sec à 30 % avec le mélange de solvants, S. Après application sur polycarbonate et séchage à l'air, le vernis est durci pendant 2 heures à 120°C. L'adhérence au test de quadrillage obtient la note 0 (adhérence totale), mais la dureté au crayon n'atteint que la valeur 7 H. L'utilisation d'un silane époxydé a donc permis d'obtenir une très bonne adhérence, mais la dureté au crayon n'est pas améliorée par rapport à l'essai comparatif A. Il en est de même de la tension du film.

Essai comparatif C

Cet essai est réalisé en présence de silice colloïdale et d'un alcoxysilane non époxydé. Dans un récipient en verre de 1000 ml, on introduit 300 g de silice colloïdale LUDOX HS - 40® que l'on acidifie avec 20 ml d'acide formique. On coule ensuite lentement 170 g de méthyltriméthoxysilane en limitant l'élévation de température à 45°C. L'agitation est maintenue pendant 24 heures et l'évaporation s'effectue comme dans l'essai comparatif B. Le produit obtenu est dilué jusqu'à 40 % d'extrait-sec par un mélange n-butanol et isopropanol. On ajoute alors 2 % en poids de résine CYMEL 303® et on ramène l'extrait-sec à 30 % par le mélange de solvants, S. Après application sur polycarbonate, le vernis est durci pendant 2 heures à 120°C. L'adhérence au test de quadrillage obtient la note 5, c'est-à-dire que le vernis n'adhère ab-solument pas au substrat, mais la dureté au crayon atteint la valeur maximale de 9 H. La tension du film est très nettement améliorée par rapport à celle obtenue dans les essais comparatifs A et B.

Ci-aprés sont indiqués, à titre d'exemples non limitatifs, quelques modes de mise en oeuvre du procédé de fabrication des vernis conformes à l'invention.

Exemple 1

Dans un réacteur, on introduit 300 g de silice colloïdale LUDOX HS - 40® , que l'on acidifie avec 20 ml d'acide formique. On coule ensuite lentement 137 g de méthyltriméthoxysilane sous agitation, en maintenant la température en dessous de 45°C. Après avoir incorporé la totalité du méthyltriméthoxysilane, on laisse l'hydrolyse se poursuivre pendant 15 minutes et on ajoute 61 g de glycidoxypropylméthoxysilane. L'agitation est maintenue pendant 24 heures. Par évaporation sous vide et sous agitation, à une température inférieure à 30°C, on ramène le volume de la masse réactionelle à 50 % de son volume initial, ce qui correspond à un extrait-sec de 81 %. Le produit est alors dilué jusqu'à un extrait-sec de 40 % par un mélange d'isopropanol et de n-butanol, en proportions égales.

On ajoute à la préparation 2 % en poids de résine CYMEL 303® et on ramène l'extrait-sec à 30 % par addition du mélange solvants, S.

Après application sur polycarbonate, le vernis est durci 2 heures à 120°C. L'indice de réfraction du polycarbonate verni est de 1,659 alors que celui du polycarbonate non verni est de 1,586 et que celui du verre est de 1,63.

Les résultats des essais effectués sur ce vernis figurent dans le tableau I.

Exemple 2

On opère comme dans l'exemple 1, mais en utilisant au départ 210 g de silice colloïdale LUDOX HS - 40® et 210 g de méthyltriméthoxysilane, et toujours 20 ml d'acide formique. Après hydrolyse partielle du méthyltriméthoxysilane , on ajoute 79 g de glycidoxypropyltriméthoxysilane et on laisse réagir 24 heures. A l'issue de la concentration sous-vide, l'extrait-sec est de 62 %. Le produit est ensuite dilué à 40 % par le mélange de n-butanol et d'isopropanol.

On ajoute alors à la préparation 3 % de résine CYMEL 303® et on dilue à 30 % par le mélange solvants, S.

Les résultats d'application de ce vernis sur polycarbonate sont donnés dans le tableau I.

Exemple 3

On opère exactement comme dans l'exemple 1, avec les mêmes proportions de silice colloïdale, de méthyltriméthoxysilane et de glycidoxypropyltriméthoxysilane. A la préparation diluée à 40 % on ajoute 15 % de résine CYMEL 303® au lieu de 2 %. Cette proportion de résine aminoplaste est supérieure à la proportion maximale considérée comme utilisable dans le cadre de l'innovation.

Après durcissement du vernis déposé sur polycarbonate après 2 heures à 120°C, le film présente le défaut de faïençage, qui, selon la norme française T 30001, est une altération se présentant sous form d'un craquelage superficiel, qui, ici, est en réseau large et régulier.

Malgré ce défaut de surface, il a été possible d'effectuer des mesures d'adhérence et de dureté au crayon, dont les résultats sont rapportés dans le tableau I.

Exemple 4

On opère comme dans l'exemple 1, avec les mêmes proportions de silice colloïdale, de méthyltriméthoxysilane et de glycidoxypropyltriméthoxysilane. Mais, à la préparation diluée jusqu'à un extrait-sec de 40 %, on ajoute 2 % de résine CYMEL 1116® à la place dy CYMEL 303®. La résine CYMEL 1116® est une résine mélamine-formaldéhyde mixte méthylée et éthylée. On ramène l'extrait-sec à 30 % à l'aide du mélange solvants, S.

Les résultats d'application sur polycarbonate, après durcissement de 2 heures à 120°C, figurent dans le tableau I.

Exemple 5

On opère comme dans l'exemple 1, avec les mêmes proportions de silice colloïdale,de méthyltriméthoxysilane et de glycidoxypropyltriméthoxysilane, mais à la preparation diluée à 40 % d'extrait-sec, on rajoute 2 % de résine CYMEL 370® à la place du CYMEL 303®. La résine CYMEL 370® est une résine mélamineformaldéhyde partiellement méthylée. On ramène toujours l'extrait-sec à 30 % avec le mélange solvants, S.

L'utilisation de cette résine plus réactive permet de réduire à 1 h 30 le temps de durcissement à 120°C du vernis déposé sur polycarbonate, au lieu de 2 heures.

Les résultats de cet essai sont donnés dans le tableau I.

Exemple 6

On opère exactement comme dans l'exemple 1, sauf qu'à la préparation diluée à 40 % d'extrait-sec on ajoute, à la place de la résine CYMEL 303®, 2 % résine PLASTOPAL AWE (marque déposée de la Société BASF pour une résine urée-formaldéhyde plastifée et butylée).

L'utilisation de cette résine permet de réduire à 1 heure le temps de durcissement à 120°C du vernis déposé sur polycarbonate.

Les qualités du film obtenu sont données dans le tableau I.

Exemple 7

On reproduit exactement l'exemple 1, jusqu'à la dilution à 40 % d'extrait-sec et à l'addition de 2 % de résine CYMEL 303®. On ajoute alors au vernis 0,4 % de TINUVIN 328® et 0,2 % de TINUVIN 292® de la Société CIBA-GEIGY.

Le TINUVIN 328® est un agent de protection contre la lumiére, de la classe des benzotriazoles. Son rôle d'absorbeur des radiations ultra-violettes permet de protéger le substrat contre la dégradation photochimique.

Le TINUVIN 292® est un agent de protection contre la lumière, de type aminé. Son rôle stabilisant permet de protéger le film de vernis contre sa propre dégradation photochimique.

Le vernis appliqué sur polycarbonate a été durci pendant 2 heures à 120°C.

Les résultats donnés dans le tableau I montrent que l'utilisation des deux agents de protection contre la lumière permet d'améliorer la tenue du vernis au "XENOTEST" sans nuire à ses autres propriétés.

## TABLEAU I

RESULTATS DES ESSAIS REALISES SUR LES COMPOSITIONS DES EXEMPLES 1 à 7

| Exemples | Conditions de durcissement | Adhérence cote 0 à 5 | Dureté crayon | Test d'abrasion Taber "H" | Aspect du film | Tenue au Xénotest |
|---|---|---|---|---|---|---|
| 1 | 2 h à 120°C | 0 | 9 H | 2,5 | bonne tension limpide | > 1500 heures |
| 2 | 2 h à 120°C | 0 | 9 H | 3,0 | bonne tension limpide | > 1500 heures |
| 3 | 2 h à 120°C | 0 | 9 H | | faïençage | |
| 4 | 2 h à 120°C | 0 | 9 H | 0,8 | bonne tension limpide | |
| 5 | 1 h 30 à 120°C | 0 | 9 H | 2,0 | bonne tension limpide | |
| 6 | 1 h à 120°C | 0 | 9 H | 2,0 | bonne tension limpide | > 1500 heures |
| 7 | 2 h à 120°C | 0 | 9 H | 2,6 | bonne tension limpide | > 2000 heures |

## Revendications

1 - Vernis à haute dureté, résistant à l'abrasion pour le revêtement de substrats solides, composés essentiellement de polysiloxanes, de silice colloïdale et d'une résine aminoplaste, dans un mélange de solvants, caractérisé en ce qu'il contient :

a - 4 à 90 % en poids, par rapport au total des constituants (a), (b) et (c), de silice colloïdale ;

b - 9 à 95 % en poids, par rapport au total des constituants (a), (b) et (c), du produit d'hydrolyse et de condensation partielle d'au moins un trialcoxysilane non époxydé, de formule

$R - Si ( OR' )_3$

dans laquelle R représente un radical choisi dans le groupe des radicaux alkyles contenant de 1 à 4 atomes de carbone, et des radicaux chloro-3-propyle, trifluoro-3, 3-3-propyle, mercapto-3-propyle, méthacryloxy-3-propyle, vinyle et phényle, tandis que R' représente un radical alcoxyalkyle contenant 2 à 4 atomes de carbone ;

c - 1 à 87 % en poids, par rapport au total des constituants (a), (b) et (c), du produit d'hydrolyse et de condensation partielle au moins un trialcoxysilane époxydé, de formule

$R'' - Si ( OR' )_3$

dans laquelle R" représente un radical porteur d'un groupement époxyde ;

d - 0,5 à 9 % en poids, par rapport au total des constituants (a), (b) et (c), d'une résine aminoplaste soluble (d), choisine dans le groupe des résines mélamine-formaldéhyde et des résines urée-formaldéhyde.

2 - Vernis selon la revendication 1, caractérisé en ce qu'une partie du constituant (b), représentant jusqu'à 30 % de la masse de ce constituant, est remplacé par le produit d'hydrolyse et de condensation partielle d'un dialkyldialcoxysilane non époxydé et/ou d'un tétraalcoxysilane.

3 - Vernis selon l'une des revendications 1 ou 2, caractérisé en ce que les matières solides sont en solution à la concentration de 10 à 50 % en poids dans un mélange d'eau et de solvants organiques miscibles.

4 - Vernis selon l'une quelconque des revendications 1 à 3, caractérisé en ce qu'il contient un catalyseur acide de durcissement.

5 - Vernis selon l'une quelconque des revendications 1 à 4, caractérisé en ce qu'il contient un ou plusieurs adjuvants secondaires choisis dans le groupe des colorants, des agents de tension de film et des agents de protection contre la lumière.

6 - Procédé de préparation du vernis selon l'une quelconque des revendications 1 à 5, caractérisé en ce que l'on effectue d'abord l'hydrolyse et la condensation partielle de l'alcoxysilane non époxydé en présence de la silice colloïdale, et ensuite l'hydrolyse et la condensation partielle de l'alcoxysilane époxydé en présence des produits de la premiére réaction.

7 - Application du vernis selon l'une quelconque des revendications 1 à 5 au revêtement d'un substrat solide, caractérisé en ce que, ce substrat ayant été mis en contact avec le vernis, on chauffe le substrat et le vernis à une température d'environ 120°C pendant une durée n'excédant pas 2 heures.

## Claims

1. A hard varnish having a high abrasion resistance, for the coating of solid substrates, essentially composed of polysiloxanes, colloidal silica and an aminoplastic resin, in a mixture of solvents characterized in that it contains:

a) 4 to 90% by weight of colloidal silica, as a ratio of the total of the constituents (a), (b) and (c);

b) 9 to 95% by weight, as a ratio of the total of the constituents (a), (b) and (c), of the product of hydrolysis and partial condensation of at least one non-epoxidized trialkoxysilane, of formula

$R–Si(OR')_3$

in which R represents a radical chosen from the group of alkyl radicals containing 1 to 4 carbon atoms, and chloro-3-propyl, trifluoro-3,3,3-propyl, mercapto-3-propyl, methacryloxy-3-propyl, vinyl and phenyl radicals, whilst R' represents an alkoxyalkyl radical containing 2 to 4 carbon atoms;

c) 1 to 87% by weight, as a ratio of the total of the constituents (a), (b) and (c), of the product of hydrolysis and partial condensation of at least one epoxidized trialkoxysilane, of formula

$R''–SI(OR')_3$

in which R" represents a radical carrying an epoxide group;

d) 0.5 to 9% by weight, as a ratio of the total of the constituents (a), (b) and (c), of a soluble aminoplast resin (d), chosen from the group of melamine-formaldehyde resins and of urea-formaldehyde resins.

2. A varnish according to Claim 1, characterized in that a portion of constituent (b), representing up to 30% of the mass of that constituent, is replaced by the product of hydrolysis and partial condensation of a non-epoxidized dialkyldialkoxysilane and/or of a tetraalkoxysilane.

3. A varnish according to one of Claims 1 or 2, characterized in that the solid materials are in solution in a concentration of 10 to 50% by weight in a mixture of water and miscible organic solvents.

4. A varnish according to any of Claims 1 to 3, characterized in that it contains an acid hardening catalyst.

5. A varnish according to any of Claims 1 to 4, characterized in that it contains one or more secondary additions chosen from the group of colouring agents, film tension agents and agents providing protection against light.

6. A process for the preparation of a varnish according to any of Claims 1 to 5, characterized in that the hydrolysis and partial condensation of the non-epoxidized alkoxysilane is first performed in the presence of the colloidal silica, and afterwards the hydrolysis and partial condensation of the epoxidized alkoxysilane is performed in the presence of the products of the first reaction.

7. The application of the varnish according to any of Claims 1 to 5 to the coating of a solid substrate, characterized in that, this substrate having been placed in contact with the varnish, the substrate and varnish are heated to a temperature of about 120°C for a period not exceeding 2 hours.

**Patentansprüche**

1. Harte abrasionsfeste Lacke zur Beschichtung fester Substrate, im wesentlichen bestehend aus Polysiloxanen, kolloidalem Siliciumdioxid und einem Aminoplastharz in einer Lösungsmittelmischung, dadurch gekennzeichnet, daß sie enthält:

a – 4–90 Gew.%, bezogen auf die Summe der Bestandteile (a), (b) und (c) kolloidales Siliciumdioxid;

b – 9–95 Gew.%, bezogen auf die Summe der Bestandteile (a), (b) und (c), des partiellen Hydrolyse- und Kondensationsproduktes von mindestens einem nicht epoxidierten Trialkoxysilan der Formel

$R{-}Si(OR')_3$

worin R ein Radikal bedeutet ausgewählt aus der Gruppe Alkylradikale mit 1–4 Kohlenstoffatomen, 3-Chlor-propyl, 3,3,3-Trifluor-propyl, 3-Mercapto-propyl, 3-Methacryloxy-propyl, Vinyl und Phenyl, und der Rest R' ein Alkoxyalkylradikal mit 2–4 Kohlenstoffatomen bedeutet;

c – 1–87 Gew.%, bezogen auf die Summe der Bestandteile (a), (b) und (c), des partiellen Hydrolyse- und Kondensationsproduktes von mindestens einem epoxidierten Trialkoxysilan der Formel

$R''{-}Si(OR')_3$

worin R'' ein Radikal bedeutet, das eine Epoxygruppe trägt;

d – 0,5–9 Gew.%, bezogen auf die Summe der Bestandteile (a), (b) und (c), eines löslichen Aminoplastharzes (d), ausgewählt aus der Gruppe Melamin-Formaldehydharze und Harnstoff-Formaldehydharze.

2. Lack nach Anspruch 1, dadurch gekennzeichnet, daß ein Teil des Bestandteils (b) bis zu einer Menge von 30% dieses Bestandteiles durch das partielle Hydrolyse- und Kondensationsprodukt eines nicht epoxidierten Dialkyldialkoxysilans und/oder eines Tetraalkoxysilans ersetzt ist.

3. Lack nach einem der Ansprüche 1 oder 2, dadurch gekennzeichnet, daß die Feststoffe in einer Konzentration von 10–50 Gew.% in Lösung in einer Mischung aus Wasser und mischbaren organischen Lösungsmitteln vorliegen.

4. Lack nach einem der Ansprüche 1–3, dadurch gekennzeichnet, daß er einen sauren Härtungskatalysator enthält.

5. Lack nach einem der Ansprüche 1–4, dadurch gekennzeichnet, daß er einen oder mehrere Zusatzstoffe enthält, die ausgewählt sind aus der Gruppe Farbstoffe, Filmbildungsmittel und Lichtschutzmittel.

6. Verfahren zur Herstellung eines Lackes nach einem der Ansprüche 1–5, dadurch gekennzeichnet, daß man zuerst die partielle Hydrolyse und Kondensation des nicht epoxidierten Alkoxysilans in Gegenwart des kolloidalen Siliciumdioxids durchführt, und dann die partielle Hydrolyse und Kondensation des epoxidierten Alkoxysilans in Gegenwart der Reaktionsprodukte der ersten Umsetzung.

7. Verwendung des Lackes nach einem der Ansprüche 1–5 zur Beschichtung eines festen Substrats, dadurch gekennzeichnet, daß man, nachdem das Substrat in Kontakt mit dem Lack gebracht wurde, das Substrat und den Lack bei einer Temperatur von ca. 120°C während einer Dauer, die zwei Stunden nicht überschreitet, erhitzt.